# EUROPEAN PATENT APPLICATION

(11) **EP 4 796 392 A1**
(43) Date of publication of application: **26.08.2026**
(21) Application number: 24881157.2
(22) Date of filing: 05.08.2024
(51) Int. Cl.: B60R 25/30

(54) **VIBRATION MONITORING METHOD AND APPARATUS, AND VEHICLE**

(30) Priority: 24.10.2023 CN 202311391072
(71) Applicant: Guangzhou Xiaopeng Motors Technology Co., Ltd., Guangzhou, Guangdong Province 510000 (CN)
(72) Inventor: ZENG, Yu, Guangzhou, Guangdong 510000 (CN); WEI, Shujin, Guangzhou, Guangdong 510000 (CN); LI, Zesheng, Guangzhou, Guangdong 510000 (CN); TAN, Guangze, Guangzhou, Guangdong 510000 (CN); GAO, Xueran, Guangzhou, Guangdong 510000 (CN); WANG, Yin, Guangzhou, Guangdong 510000 (CN); HU, Mianzhou, Guangzhou, Guangdong 510000 (CN); YAN, Xue, Guangzhou, Guangdong 510000 (CN); YU, Peng, Guangzhou, Guangdong 510000 (CN)
(74) Representative: Isarpatent
(86) International application number: PCT/CN2024/109877
(87) International publication number: WO 2025/086787

(57) **Abstract**

A vibration monitoring method, including: step S110, acquiring a remaining range of a vehicle (100), in case where a vibration monitoring function of the vehicle (100) is activated; step S120, activating a vibration shooting function of the vehicle (100), if the remaining range is within a preset range, wherein a camera of the vehicle (100) is in an activated state in case where the vibration shooting function is activated; and step S130, acquiring and storing images collected by the camera, if it is detected that there is abnormal vibration in the vehicle during a process of activating the vibration shooting function. A vibration monitoring apparatus, a vehicle and a computer-readable storage medium are also disclosed. By Incorporating the shooting function into the vibration monitoring function of the vehicle (100), the method enhances intelligence, effectiveness and accuracy of vibration monitoring of the vehicle (100).

## Description

### CROSS REFERENCE TO RELATED APPLICATION

This patent application claims priority to Chinese Patent Application No. 202311391072.9, filed on October 24, 2023, the entire contents of which are incorporated herein by reference.

### TECHNICAL FIELD

The present application relates to the field of automotive technology, and more specifically, to a vibration monitoring method, a vibration monitoring apparatus and a vehicle.

### BACKGROUND

With the development of science and technology, a use of vehicles has become increasingly widespread, and users have placed growing emphasis on a vehicle property security. Especially when parking in non-designated areas or in parking spaces without surrounding cameras surveillance, it is very difficult to trace the responsible party, even if a vehicle is maliciously damaged. Consequently, in the related technologies, there is a growing demand for higher intelligence in vehicle vibration monitoring function.

### SUMMARY

The present application proposes a vibration monitoring method, a vibration monitoring apparatus and a vehicle, in order to improve the issues described above.

In a first aspect, an embodiment of the present application provides a vibration monitoring method, the method includes acquiring a remaining range of a vehicle, in case where a vibration monitoring function of the vehicle is activated; activating a vibration shooting function of the vehicle, if the remaining range is within a preset range, wherein a camera of the vehicle is in an activated state in case where the vibration shooting function is activated; and acquiring and storing images collected by the camera, if a presence of an abnormal vibration in the vehicle is detected during a process of activating the vibration shooting function.

In a second aspect, an embodiment of the present application further provides a vibration monitoring apparatus, the apparatus includes a remaining range acquisition module, a vibration shooting function activation module and an abnormal vibration monitoring module, wherein the remaining range acquisition module is used to acquire a remaining range of a vehicle, in case where a vibration monitoring function of the vehicle is activated; the vibration shooting function activation module is used to activate a vibration shooting function of the vehicle, if the remaining range falls within a preset range, wherein a camera of the vehicle is in an activated state in case where the vibration shooting function is activated; and the abnormal vibration monitoring module is used to acquire and store images collected by the camera, if a presence of an abnormal vibration in the vehicle is detected during a process of activating the vibration shooting function.

In a third aspect, an embodiment of the present application further provides a vehicle including one or more processors; a memory; and one or more application programs, wherein the one or more application programs are stored in the memory and configured to be executed by the one or more processors, and the one or more programs are configured to execute the method in accordance with the first aspect.

In a fourth aspect, an embodiment of the present application further provides a computer-readable storage medium, wherein program codes are stored in the computer-readable storage medium, and the program codes are triggered by a processor to execute the method in accordance with the first aspect.

The embodiments of the present application acquire a remaining range of the vehicle in case where a vibration monitoring function of the vehicle is activated; activating a vibration shooting function of the vehicle if the remaining range falls within a preset range, wherein a camera of the vehicle is in an activated state in case where the vibration shooting function is activated; and acquire and store images collected by the camera if a presence of an abnormal vibration in the vehicle is detected in case where a vibration shooting function is activated, and furthermore, the vibration monitoring method enhances intelligence, effectiveness, and accuracy of the vibration monitoring of the vehicle, by Incorporating a shooting function into the vibration monitoring function of the vehicle. In addition, during the process of vibration monitoring of the vehicle, by activating the vibration shooting function again for vibration monitoring in case where the remaining range of the vehicle falls within the preset range, effectiveness of on-site shooting of abnormal vibrations of the vehicle is ensured, while substantial power consumption resulting from continuous activation of the vibration shooting function is avoided, and the power consumption of the vibration monitoring of the vehicle is reduced, in case where intelligence of the vibration monitoring of the vehicle is improved.

### BRIEF DESCRIPTION OF THE DRAWINGS

In order to more clearly illustrate technical solutions in the embodiments of the present application, the accompanying drawings used in the description of the embodiments will be simply introduced below, and it is apparent that the accompanying drawings in the following description are only some embodiments of the present application, and for those skilled in the art, other accompanying drawings can be obtained based on these drawings without creative work.
FIG. 1 is a schematic view of an application scenario of a vibration monitoring method according to an embodiment of the present application;
FIG. 2 is a schematic flowchart of a vibration monitoring method according to an embodiment of the present application;
FIG. 3 is a schematic flowchart of a vibration monitoring method according to an embodiment of the present application;
FIG. 4a-4c are a schematic flowchart of a vibration monitoring method according to an embodiment of the present application;
FIG. 5 is a block diagram of modules of a vibration monitoring apparatus according to an embodiment of the present application;
FIG. 6 is a block diagram of a vehicle for executing a vibration monitoring method according to an embodiment of the present application; and
FIG. 7 is a block diagram of a memory unit for storing or carrying program codes that implement a vibration monitoring method according to an embodiment of the present application.

### DETAILED DESCRIPTION

In order to enable those skilled in the art to better understand the solutions of the present application, the technical solutions in the embodiments of the present application will be clearly and completely described below in conjunction with the accompanying drawings in the embodiments of the present application.

Vibration Monitoring Function: configured as a function used for the sentry mode on a vehicle, it is implemented by a vibration monitoring system of the vehicle. The vibration monitoring system can include a central controller of the vehicle and a vibration sensor, and is used to accurately identify vehicle status and impact alarm events, and to timely provide on-site information to a vehicle owner through a gateway system of the vehicle. Meanwhile, the sentry mode is designed in such a way that when the vehicle is subjected to sudden impact or other infringing vehicle acts in the case of parking, an alarm is triggered through the sentry mode system, on-site images are shot and recorded in real-time utilizing entire vehicle cameras, and event content is simultaneously sent to the vehicle owner, thereby preserving relevant information and data for subsequent protection of the vehicle owner's rights and interests.

In the related technologie, after Incorporating a shooting function into a vibration monitoring function of the vehicle, if one or more cameras are awakened only upon detection of an abnormal vibration of the vehicle, there is possibility that an accurate on-site scenario of such abnormal vibration may fail to be captured since it takes the cameras more than ten seconds to power up and complete the photograph; while, if one or more cameras remain constantly awakened, a static power consumption during activation of the vehicle vibration monitoring function would be increased, resulting in a rapid decrease of a remaining range of the vehicle.

Accordingly, in the related technologie, there is a challenge in reducing energy consumption in vehicle vibration monitoring while enhancing the intelligence of automotive vibration monitoring and improving user experience.

To address the issues discussed above, after long-time research, the inventor proposes a vibration monitoring method, a vibration monitoring apparatus, and a vehicle provided according to the embodiments of the present application. Through, in case where the vibration monitoring function of the vehicle is activated, activating a vibration shooting function to monitor the vehicle vibration when it is determined a remaining range of the vehicle falls within a preset range, the intelligence of the vehicle vibration monitoring is improved, and power consumption of the vehicle vibration monitoring is reduced.

Thereinafter, a description of an application environment applicable to the vibration monitoring method provided according to an embodiment of the present application is set forth below.

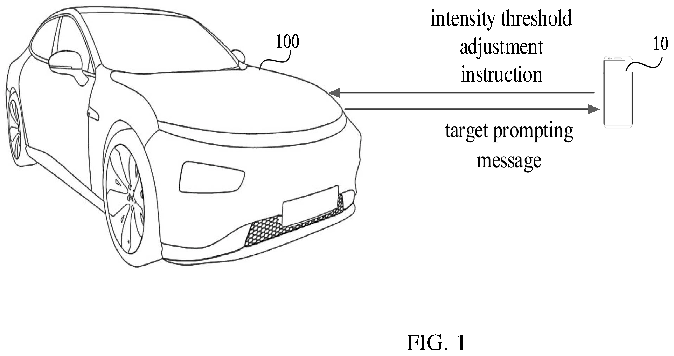

Referring to FIG. 1, FIG. 1 is a schematic view of an application environment applicable to the vibration monitoring method according to an embodiment of the present application. As shown in FIG. 1, the application environment includes a vehicle 100 and an electronic device 10. The vehicle 100 can include a Microcontroller Unit (MCU), a gravity sensor (GSensor), a central control unit, a Telematics BOX (TBOX), and cameras.

The vehicle 100 can be used for wired or wirelessly connecting with the electronic device 10 and performing data interaction. The vehicle 100, along with a router and the electronic device 10, can form a local area network, and the vehicle 100 and the electronic device 10 can establish a wireless connection based on the local area network, and through the wireless connection, the vehicle 100 and the electronic device 10 can also perform data interaction.

The electronic device 10 can include an application (APP), through which a user can configure enable or disable a switch for the vibration monitoring function, turn on or off a switch for the vibration shooting function, and adjust sensitivity of the GSensor. For example, the user can input an intensity threshold adjustment instruction to the vehicle 100 via the electronic device 10. The electronic device 10 can also obtain a target prompting message sent by the vehicle 100 through the APP to notify of the presence of an abnormal vibration in the vehicle 100.

The MCU can be used to manage the GSensor, perform vibration filtering, and report abnormal vibration events to the central control unit and the TBOX. The GSensor can be used to catch an abnormal vibration event of the vehicle 100 exceeding a sensitivity and to awaken the MCU upon catching the abnormal vibration event. The central control unit can be used to, after receiving the abnormal vibration event reported by the MCU, trigger the camera to take photos and videos, and to send to the MCU the instructions for the vibration monitoring function the vibration shooting function as configured by the user through the central control unit, and adjusting GSensor sensitivity as input by the user. The TBOX can be used to receive abnormal vibration events reported by the MCU, generate and send the target prompting message to the electronic device 10, and forward to the MCU the instructions for configuring the vibration monitoring function and configuring the shooting function, and adjusting GSensor sensitivity which are received from the user and input through the electronic device 10. The cameras can receive the shooting instruction sent by the central control unit, capture an external vehicle environment in response to the shooting instruction, packetize captured data, and transmit the captured data to the central control unit via in-vehicle Ethernet for storage, thereby facilitating subsequent access to the captured data by the user.

The embodiments of the present application are described in detail below with reference to the accompanying drawings.

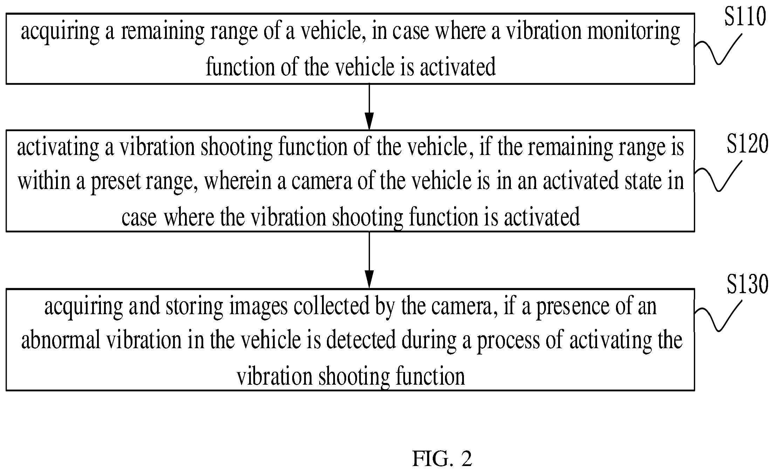

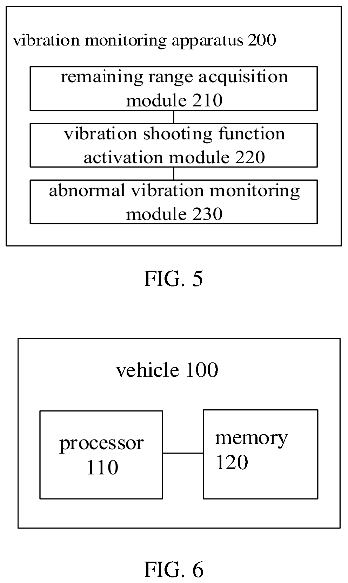

Referring to FIG. 2, FIG. 2 is a schematic flowchart of a vibration monitoring method according to an embodiment of the present application. By incorporating the shooting function into the vibration monitoring function of the vehicle, the effectiveness and accuracy of vehicle vibration monitoring are enhanced. In addition, during a process of performing the vibration monitoring of the vehicle, the vibration shooting function is activated again for vibration monitoring in case where a remaining range of the vehicle falls within a preset range, thereby ensuring effectiveness and accuracy of on-site images shooting of abnormal vibrations of the vehicle, while avoiding substantial power consumption of the vehicle that would result from continuous activation of the vibration shooting function. Thus, the intelligence of the vehicle vibration monitoring is improved, while the power consumption of vehicle vibration monitoring is reduced. In a specific embodiment, the vibration monitoring method can be applied to a vibration monitoring apparatus 200 as shown in FIG. 5 and a vehicle 100 (as shown in FIG. 6) equipped with the vibration monitoring apparatus 200. The detailed flow of the present embodiment is described below with the vehicle as an example. Of course, it is to be understood that the vehicle applicable to the present embodiment can include electric vehicles, gasoline vehicles, and other electronic devices, without limitation. The flow shown in FIG. 2 is described in detail below. The vibration monitoring method can specifically include the following steps:
Step S110: acquiring a remaining range of a vehicle, in case where a vibration monitoring function of the vehicle is activated.

In some embodiments, the vehicle can receive a first control instruction input by the user, wherein the first control instruction can be used to indicate activation of the vibration monitoring function of the vehicle. Correspondingly, the vehicle can activate the vibration monitoring function of the vehicle in response to the first control instruction. Meanwhile, the vehicle can acquire the remaining range of the vehicle in case where the vibration monitoring function is activated.

In some embodiments, conditions for activating the vibration monitoring function of the vehicle are preset in the vehicle and remain immutable. For example, the condition can be that the vehicle is power-off state and the doors are closed, or that there are no passengers in the vehicle, among others, without limitation. Correspondingly, the vehicle can automatically activate the vibration monitoring function thereof in case where it is detected that the vehicle is turned off and the doors are closed; or the vehicle can automatically activate the vibration monitoring function thereof in case where it is detected that there are no passengers in the vehicle. Meanwhile, the vehicle can acquire the remaining range thereof in case where a vibration monitoring function of the vehicle is activated. Meanwhile, the vehicle can acquire the remaining range thereof by detecting the State of Charge of the vehicle.

Step S120: activating the vibration shooting function of the vehicle, if the remaining range falls within a preset range, wherein a camera of the vehicle is in an activated state in case where the vibration shooting function is activated.

In some embodiments, after acquiring the remaining range of the vehicle, the vehicle can compare the remaining range with the preset range, and activate the vibration shooting function of the vehicle if it is determined that the remaining range falls within the preset range. The camera of the vehicle is maintained in an activated state in case where the vibration shooting function is activated.

The preset range can be preset in the vehicle, and can be configured autonomously by the user or derived from third-party experimental data. Exemplarily, the preset range is over 200 kilometers.

In some embodiments, the vehicle can compare the remaining range with a first range, and deactivate the vibration shooting function if the remaining range is less than the first range. The first range can be understood as a deactivation range for the vibration shooting function. Meanwhile, the first range can be set autonomously by a user or derived from third-party data, such as 100 kilometers obtained from the third-party experimental data. Since the remaining range is less than the first range, the vibration shooting function of the vehicle is deactivated, which can be understood that the vibration shooting function of the vehicle is automatically deactivated due to too low remaining range of the vehicle, further reducing power consumption of the vibration monitoring of the vehicle.

In some embodiments, the vehicle can further compare the remaining range with a second range, and if the remaining range exceeds the second range, further determine whether the vibration shooting function of the vehicle was previously automatically deactivated due to the too low remaining range. If it is detected that the vibration shooting function of the vehicle was previously automatically deactivated due to the too low remaining range, the vibration shooting function can be activated; and if it is detected that the vibration shooting function of the vehicle was not previously automatically deactivated due to the too low remaining range, an activated state of the vibration shooting function can be maintained. The second range can be understood as a recovery range for the vibration shooting function, and can be configured autonomously by a user or derived from the third-party experimental data, such as 200 kilometers obtained from the third-party experimental data. Meanwhile, a scope exceeding the second range can be understood as the preset scope.

It is to be understood that after the vibration shooting function of the vehicle is deactivated due to the too low remaining range, the vibration shooting function can be activated upon recovery of the remaining range of the vehicle to within the preset scope, thereby improving intelligence of the vibration monitoring of the vehicle.

Step S130: acquiring and storing images collected by the camera, if abnormal vibration of the vehicle is detected during a process of activating the vibration shooting function.

In some embodiments, after the vibration shooting function of the vehicle is activated, images collected by the camera of the vehicle can be acquired and stored, if abnormal vibration of the vehicle is detected during a process of activating the vibration shooting function. After activation of the vibration shooting function of the vehicle, the vehicle can perform images collection via the camera. Correspondingly, if abnormal vibration of the vehicle is detected during a process of activating the vibration shooting function, the vehicle can acquire the images collected by the camera and store the acquired images, thereby ensuring catching of on-site situation of the abnormal vibration of the vehicle, improving accuracy and effectiveness of abnormal vibration monitoring, and enhancing user experience.

In case where detecting the abnormal vibration of the vehicle, the vehicle can acquire images collected by the camera during a time period from a first preset duration prior to a moment of the abnormal vibration to a second preset duration subsequent to the moment of the abnormal vibration, and store the images in a target memory of the vehicle (e.g., the central control unit), thereby completely catching antecedents and consequences of the abnormal vibration event, and enhancing the user experience of the vehicle vibration monitoring. Furthermore, only the images within the time period are stored in the target memory of the vehicle, so that storage space of the vehicle is saved, and vehicle resources are saved. After acquiring the images of the time period, the MCU, the central control unit, the TBOX and cameras of the vehicle can be kept in an awakened state, without storing the images collected by the camera in the target memory until an abnormal vibration is detected again during the process of activating the vibration shooting function, the images collected by the camera during a time period from a first preset duration prior to a moment of the abnormal vibration to a second preset duration subsequent to the moment of the abnormal vibration are acquired and stored in the target memory of the vehicle, thereby saving resources and power consumption of the vehicle vibration monitoring.

In some embodiments, a process for detecting whether there is an abnormal vibration in the vehicle can includes acquiring a vibration intensity of the vehicle, acquiring a vehicle state of the vehicle if the vibration intensity is greater than a target intensity threshold, and determining whether there is an abnormal vibration in the vehicle according to the vehicle state.

The vehicle can detect the vibration intensity of the vehicle through the GSensor; correspondingly, the MCU of the vehicle can obtain the vibration intensity of the vehicle detected by the GSensor, and compare the vibration intensity with the target intensity threshold. Correspondingly, if the MCU detects that the vibration intensity exceeds the target intensity threshold, the MCU can obtain the vehicle state of the vehicle, and determine whether there is the abnormal vibration in the vehicle based on the vehicle state.

As an implementable means, the target intensity threshold can be preset in the vehicle and remain immutable. The immutable target intensity threshold can be configured by the user or derived by the vehicle from the third-party experimental data, without limitation.

As another implementable means, the vehicle is used for connection with the electronic device. Correspondingly, before acquiring the vehicle state of the vehicle if the vibration intensity is greater than the target intensity threshold, the vehicle can receive an intensity threshold adjustment instruction sent by the electronic device, and determine the target intensity threshold from multiple intensity thresholds according to the intensity threshold adjustment instruction.

Multiple intensity thresholds can be preset in the vehicle, such as high, medium, and low intensity threshold levels. The lower the level, the higher the corresponding intensity threshold, the lower the frequency of triggering abnormal vibration detection in the vehicle, and correspondingly, the lower the power consumption of respective vibration monitoring of the vehicle in case where the vibration shooting function is activated. Based on this, the user can input an intensity threshold adjustment instruction, to autonomously determine the target intensity threshold from multiple intensity thresholds, further improving intelligence of the vehicle vibration monitoring of the vehicle and enhancing the user experience of the vehicle vibration monitoring.

In some embodiments, if it is detected by the vehicle that the vibration intensity is greater than the target intensity threshold, a process for acquiring the vehicle state of the vehicle can include determining a moment at which the detected vibration intensity of the vehicle is greater than the target intensity threshold as a target moment, determining a target duration according to the target moment, and acquiring the vehicle state of the vehicle within the target duration.

The target duration can include a first duration prior to the target moment and a second duration subsequent to the target moment. The first duration and the second duration can be preset in the vehicle, configured autonomously by a user, or derived from the third-party experimental data.

The vehicle state can include at least one from a group consisting of an open situation and/or closed situation of a charging port lid of the vehicle, an open situation and/or closed situation of a rear door of the vehicle, a remote honking situation of the vehicle, and a remote lock situation and/or unlock situation of the vehicle.

In some embodiments, a process that the vehicle determines whether there is the abnormal vibration in the vehicle according to the vehicle state can include: a presence of an abnormal vibration in the vehicle can be determined, if it is detected that the charging port lid of the vehicle is not in an open situation, the rear door of the vehicle is not in an open situation, the vehicle is not in a remote honking situation, and the vehicle is not in a remote unlock situation.

In some embodiments, a process that the vehicle determines whether there is an abnormal vibration in the vehicle based on the vehicle state can also include: no presence of an abnormal vibration in the vehicle can be determined, if it is detected that the charging port lid of the vehicle is in an open situation, and/or the rear door of the vehicle is in an open situation, and/or the vehicle is in a remote honking situation, and/or the vehicle is in a remote unlock situation.

It is to be understood that, considering the situations that the opening and/or closing situation of the charging port lid of the vehicle, the opening and/or closing situation of the rear door of the vehicle, the remote honking situation of the vehicle, and the remote lock and/or unlock situation of the vehicle can affect vehicle vibration. The present embodiment judges whether there is an abnormal vibration in the vehicle in conjunction with the vehicle state of the vehicle within the target duration, for purpose of improving accuracy of the abnormal vibration detection, so as to avoid false detection of abnormal vibrations in the vehicle, and improve intelligence and reduce power consumption of vehicle vibration monitoring.

The vibration monitoring method provided by an embodiment of the present application acquires a remaining range of the vehicle in case where a vibration monitoring function of the vehicle is activated; activates a vibration shooting function of the vehicle if the remaining range falls within a preset range, wherein a camera of the vehicle is in an activated state in case where the vibration shooting function is activated; and acquires and storing images collected by the camera if an abnormal vibration in the vehicle is detected in case where a vibration shooting function is activated, and furthermore, the vibration monitoring method enhances intelligence, effectiveness, and accuracy of the vibration monitoring of the vehicle, by incorporating a shooting function into the vibration monitoring function of the vehicle. In addition, during the process of vibration monitoring of the vehicle, by activating the vibration shooting function again for vibration monitoring in case where the remaining range of the vehicle falls within the preset range, effectiveness of on-site shooting of abnormal vibrations of the vehicle is ensured, while substantial power consumption resulting from continuous activation of the vibration shooting function is avoided, and the power consumption of the vibration monitoring of the vehicle is reduced, in case where intelligence of the vibration monitoring of the vehicle is improved.

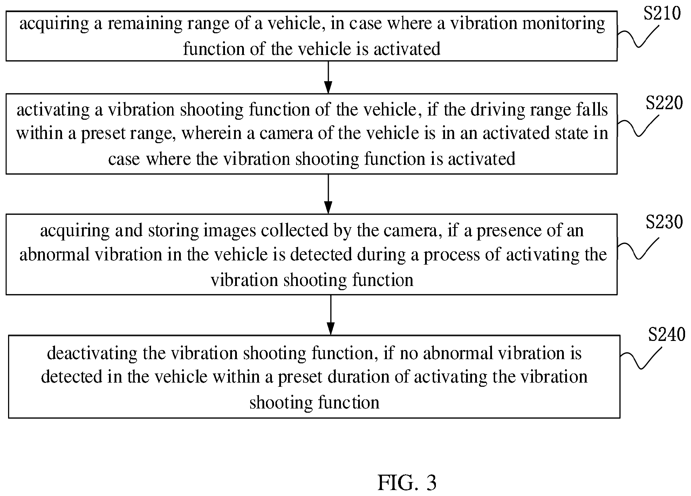

Referring to FIG. 3, FIG. 3 is a schematic flowchart of a vibration monitoring method according to an embodiment of the present application. The method is applied to the vehicle described above. The flow shown in FIG. 3 is described in detail below. The vibration monitoring method can specifically include steps as follows:
Step S210: acquiring a remaining range of a vehicle, in case where a vibration monitoring function of the vehicle is activated.
Step S220: activating a vibration shooting function of the vehicle, if the remaining range falls within a preset range, wherein a camera of the vehicle is in an activated state in case where the vibration shooting function is activated.
Step S230: acquiring and storing images collected by the camera, if an abnormal vibration in the vehicle is detected during a process of activating the vibration shooting function.

For specific descriptions of Steps S210 through S230, reference is made to the foregoing descriptions of Steps S110 through S130, which are not repeated herein.

Step S240: deactivating the vibration shooting function, if no abnormal vibration is detected in the vehicle within a preset duration of activating the vibration shooting function.

In some embodiments, the vehicle can deactivate the vibration shooting function, if no abnormal vibration is detected in the vehicle within a preset duration of activating the vibration shooting function, thereby reducing power consumption of vehicle vibration monitoring.

In some embodiments, the vehicle can deactivate the vibration shooting function, after a duration of activating the vibration shooting function reaches a preset duration, in order to reduce power consumption of vehicle vibration monitoring. Meanwhile, the preset duration can be set autonomously by the user or derived from the third-party experimental data. Exemplarily, the preset duration is 72 hours; correspondingly, the vehicle can deactivate the vibration shooting function after activation of the vibration shooting function 72 hours.

In some embodiments, the vehicle can further receive a second control instruction input by the user, wherein the second control instruction can be used to indicate deactivation of the vibration shooting function. Correspondingly, the vehicle can deactivate the vibration shooting function in response to the second control instruction, reducing power consumption of vehicle vibration monitoring and enhancing the user experience.

The user can input the second control instruction through the central control unit of the vehicle; and, the user can manipulate an associated electronic device, to generate the second control instruction generated by the electronic device and input it into the vehicle.

In some embodiments, the vehicle is used for connection with an electronic device. If a presence of an abnormal vibration in the vehicle is detected during the process of activating the vibration monitoring function of the vehicle, the vehicle can generate and send the target prompting message to the electronic device, so that the electronic device provides a prompting that there is the abnormal vibration in the vehicle.

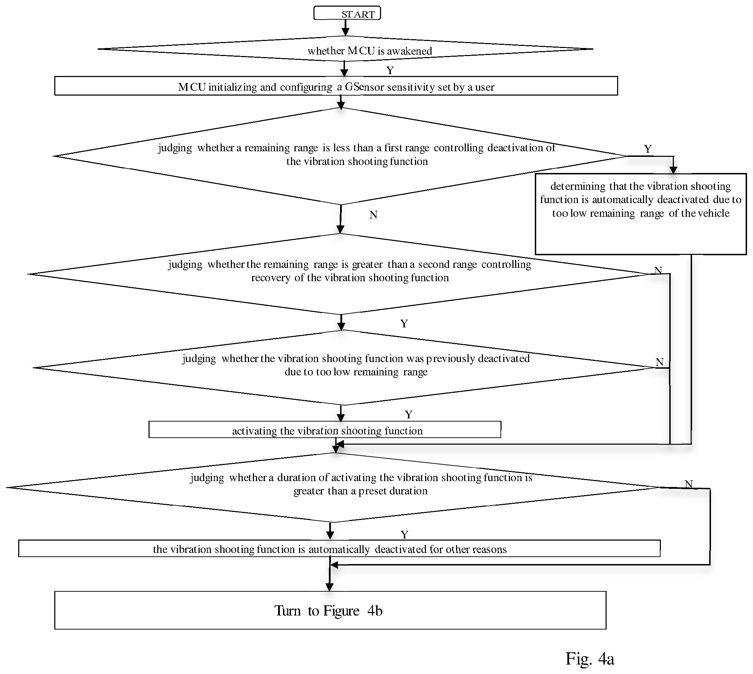

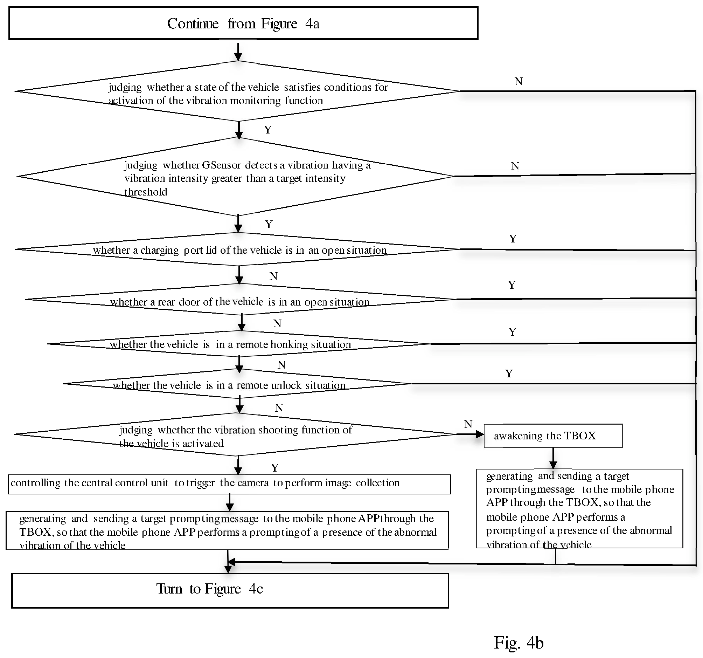

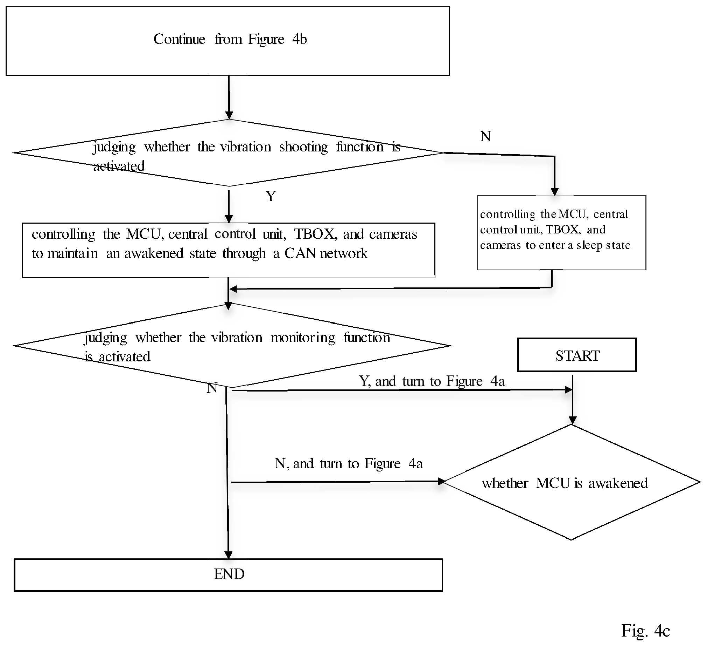

Exemplarily, referring to FIG. 4a-4c, FIG. 4a-4c are a schematic flowchart of a vibration monitoring method provided according to an embodiment of the present application. The vibration monitoring method is applied to a vehicle which includes a vibration monitoring system comprised of an MCU, a GSensor, a central control unit, a TBOX, and a camera. The vehicle can be used for connection with an electronic device for data interaction, wherein the electronic device can be a mobile phone configured with an APP. The user can control activation or deactivation of the vibration monitoring function and the vibration shooting function of the vehicle through the central control unit of the vehicle or the electronic device connected with the vehicle, thereby enabling personalized definition of working modes of the vibration monitoring system of the vehicle.

Step S10: Target Intensity Threshold Set.

The vehicle can automatically activate the vehicle vibration monitoring function in case where the vehicle is power-off state and the doors are closed; correspondingly, the vehicle can detect whether the MCU is awakened, for example, the MCU can be awakened when the GSensor detects a vibration intensity exceeding the target intensity threshold, or the MCU can be awakened in case where the vehicle is started, or the MCU is awakened by a CAN network. Correspondingly, after being awakened, the MCU can receive an intensity threshold adjustment instruction sent by an electronic device connected with the vehicle, and determine the target intensity threshold from multiple intensity thresholds according to the intensity threshold adjustment instruction. Meanwhile, the process of determining the target intensity threshold by the MCU can be understood as the MCU initializing and configuring a GSensor sensitivity set by the user, thereby enabling the user to autonomously set high/medium/low sensitivity levels of the GSensor through the central control unit of the vehicle or the electronic device connected with the vehicle, enhancing the user experience and intelligence of vehicle vibration monitoring. Meanwhile, when the vibration shooting function of the vehicle is not activated, the user can set the GSensor to a lower sensitivity level, corresponding to a lower frequency of vibration triggering, thereby correspondingly reducing the power consumption of the vehicle vibration monitoring.

Step S20: Vibration Shooting Function Control.

Correspondingly, the MCU can acquire a remaining range of the vehicle, after activating the vibration monitoring function of the vehicle, and activate the vibration shooting function of the vehicle in case where the remaining range falls within a preset range. Meanwhile, the MCU can judge whether the remaining range is less than a first range controlling deactivation of the vibration shooting function; if less, the MCU can determine that the vibration shooting function is automatically deactivated due to too low remaining range of the vehicle; if greater, the MCU can correspondingly judge whether the remaining range is greater than a second range controlling recovery of the vibration shooting function; if not greater, the MCU can judge whether no abnormal vibration of the vehicle is detected within a preset duration of activating the vibration shooting function, and if so, the MCU can deactivate the vibration shooting function to reduce the power consumption of the vehicle vibration monitoring. If greater, it can be judged whether the vibration shooting function was previously deactivated due to too low remaining range, and if so, the vibration shooting function is activated, and it can judged whether no abnormal vibration of the vehicle is detected within a preset duration of activating the vibration shooting function, and if so, the vibration shooting function can be deactivated to reduce the power consumption of the vehicle vibration monitoring.

The vehicle can automatically deactivate the vibration shooting function when the remaining range of the vehicle is less than the first range, automatically activate the vibration shooting function when the remaining range recovers to exceed the second range, and the MCU can automatically deactivate the vibration shooting function after judgement that the vibration shooting function of the vehicle is activated for a preset duration, thereby intelligently activating or deactivating the vibration shooting function of the vehicle, avoiding excessive energy consumption by the vehicle vibration shooting function, and improving intelligence of vehicle vibration monitoring.

After activating the vibration shooting function, it can be judged whether a duration of activating the vibration shooting function is greater than a preset duration (e.g., 72 hours); if the duration of activating the vibration shooting function is greater than the preset duration, it can be determined that the vibration shooting function is automatically deactivated for other reasons; if the duration of activating the vibration shooting function is not greater than the preset duration, the MCU can continue to judge whether a state of the vehicle satisfies conditions for activation of the vibration monitoring function, and perform vehicle vibration monitoring upon satisfaction of the conditions.

Step S30: Abnormal Vibration Judgment.

The MCU can determine that the vehicle satisfies conditions for activating the vehicle vibration monitoring function in case of detecting that the vehicle is power-off state and doors are closed, thereby automatically activating the vibration monitoring function of the vehicle. Correspondingly, during activating the vibration monitoring function of the vehicle, the MCU can judge whether the GSensor detects a vibration having a vibration intensity greater than the target intensity threshold; if detected, the MCU can obtain a vehicle state of the vehicle and determine whether there is an abnormal vibration in the vehicle according to the vehicle state. Correspondingly, if the MCU does not detect that the vehicle is power-off state or doors are not closed, the MCU can determine that the vehicle does not satisfy conditions for activating the vehicle vibration monitoring function, and can detect whether a vehicle vibration monitoring function activation instruction input by a user is received, and if not received, maintain the vehicle vibration monitoring function in a deactivated state. Correspondingly, the MCU can detect whether the vibration shooting function of the vehicle is activated, and if not activated, can control the MCU, central control unit, TBOX, and cameras to enter a sleep state, and if activated, can maintain the MCU, central control unit, TBOX, and cameras in an awakened state through the CAN network. Meanwhile, the MCU can detect whether the vibration shooting function of the vehicle is activated in case where no vibration having a vibration intensity greater than the target intensity threshold is detected in case of activating the vehicle vibration monitoring function. If not activated, the MCU, central control unit, TBOX, and cameras are controlled to enter a sleep state; and if activated, the MCU, central control unit, TBOX, and cameras are maintained in an awakened state through the CAN network.

The MCU can determine a moment at which the detected vibration intensity of the vehicle is greater than the target intensity threshold as a target moment, and determine a target duration according to the target moment, wherein the target duration can include a first duration prior to the target moment and a second duration subsequent to the target moment, wherein the target duration can be understood as a calibrated time period before and after a current vibration.

Correspondingly, the MCU can acquire the vehicle state of the vehicle within the target duration, such as an open and/or closed situation of a charging port lid of the vehicle, an open and/or closed situation of a rear door of the vehicle, a remote honking situation of the vehicle, and a remote lock and/or unlock situation of the vehicle. Meanwhile, it can be determined that there is an abnormal vibration in the vehicle, if the charging port lid of the vehicle is not in an open situation, the rear door of the vehicle is not in an open situation, the vehicle is not in a remote honking situation, and the vehicle is not in a remote unlock situation. Meanwhile, it can be determined that there is not an abnormal vibration in the vehicle, if the charging port lid of the vehicle is in an open situation, and/or the rear door of the vehicle is in an open situation, and/or the vehicle is in a remote honking situation, and/or the vehicle is in a remote unlock situation. It is determined that this vibration event is not an abnormal vibration when actions of charging port lid opening, rear door opening, remote honking, or remote lock and/or unlock occur within a calibrated time period before and after the vibration, and furthermore, GSensor-detected vibration events are intelligently filtered, reducing false triggering frequency of the vibration monitoring of the vehicle, and also enhancing the user experience of the vibration monitoring system of the vehicle.

Step S40: Abnormal Vibration Prompting.

The MCU can judge whether the vibration shooting function of the vehicle is activated in case where a presence of an abnormal vibration of the vehicle is detected; if activated, the central control unit can be controlled to trigger the cameras to perform images collection, and images collected by the cameras can be acquired and stored. Simultaneously, the MCU can generate and send a target prompting message to the mobile phone APP via the TBOX, so that the mobile phone APP provides a prompting of the abnormal vibration of the vehicle. If the vibration shooting function of the vehicle is not activated, the MCU can awaken the TBOX, generate and send a target prompting message to the mobile phone APP through the TBOX, so that the mobile phone APP provides a prompting of a presence of the abnormal vibration of the vehicle.

After having processed of the abnormal vibration, the vehicle can judge whether the vibration shooting function is activated; if activated, the MCU, central control unit, TBOX, and cameras are maintained in an awakened state through the CAN network; if not activated, the MCU, central control unit, TBOX, and cameras can be controlled to enter a sleep state. Meanwhile, the vehicle can further judge whether the vibration monitoring function is activated; if not activated, the vibration monitoring of the vehicle can be ended; and if activated, return to Step S10.

It is to be understood that the present embodiment can enhance the user experience of the vibration monitoring system of the vehicle and reduce power consumption of vehicle vibration monitoring, through controlling activation/deactivation of the vehicle vibration monitoring function, controlling activation/deactivation of the vibration shooting function, configuring GSensor sensitivity, deactivating the vibration shooting function in case of too low remaining range, abnormal vibration filtering and other manners.

When the vibration shooting function of the vehicle is not activated, the GSensor detects a vibration intensity exceeding the target intensity threshold to awaken the MCU and TBOX; correspondingly, after processing of the vibration event, the vehicle can control the MCU and TBOX to enter a sleep state, while the central control unit and cameras remain continuously in a sleep state. It is to be understood that power consumption of the vibration monitoring system of the vehicle in the working mode is extremely low. In addition, when the vibration shooting function of the vehicle is activated, the MCU, central control unit, TBOX, and cameras are maintained in an awakened state, enabling the vehicle vibration monitoring system in this working mode to rapidly capture on-site images of abnormal vibrations. In the present embodiment, the user can normally autonomously control deactivation of the vibration shooting function of the vehicle through the central control unit of the vehicle or the mobile phone APP, and can activate the vibration shooting function of the vehicle through the mobile phone APP after receiving a prompting of abnormal vibration, thereby continuously monitoring whether the vehicle is subjected to malicious collision or scraping, improving vibration monitoring effectiveness, reducing vibration monitoring power consumption, and enhancing the user experience. Meanwhile, the present embodiment can enhance the user experience of the vehicle vibration monitoring system and reduce the power consumption of vehicle vibration monitoring, through controlling activation/deactivation of the vehicle vibration monitoring function, controlling activation/deactivation of the vibration shooting function, configuring GSensor sensitivity, deactivating the vibration shooting function in case of too low remaining range, abnormal vibration filtering and other ways.

According to the vibration monitoring method provided according to an embodiment of the present application, compared with the vibration monitoring method shown in FIG. 2, the present embodiment can further include deactivating the vibration shooting function, if it is not detected there is abnormal vibration of the vehicle within a preset duration of activating the vibration shooting function. By automatically deactivating the vibration shooting function in case of an extended duration of activating the vehicle vibration shooting function, excessive energy consumption by the vehicle vibration shooting function is avoided, and intelligence of the vehicle vibration monitoring is improved.

Referring to FIG. 5, FIG. 5 shows a vibration monitoring apparatus according to an embodiment of the present application. The vibration monitoring apparatus 200 includes: a remaining range acquisition module 210, a vibration shooting function activation module 220, and an abnormal vibration monitoring module 230, wherein:
the remaining range acquisition module 210 is used to acquire a remaining range of the vehicle, in case where a vibration monitoring function of the vehicle is activated;
the vibration shooting function activation module 220 is used to activate a vibration shooting function of the vehicle, if the remaining range falls within a preset range, wherein a camera of the vehicle is maintained in an activated state in case where the vibration shooting function is activated; and
the abnormal vibration monitoring module 230 is used to acquire and store images collected by the camera, if a presence of an abnormal vibration in the vehicle is detected during the process of activating the vibration shooting function.

Further, the vibration monitoring apparatus 200 can further include a vibration shooting function deactivation module, wherein:
the vibration shooting function deactivation module is used to deactivate the vibration shooting function, if no abnormal vibration of the vehicle is detected within a preset duration of activating the vibration shooting function.

Further, the vehicle is used for connection with an electronic device, and the vibration monitoring apparatus 200 can further include an abnormal vibration prompting module, wherein:
the abnormal vibration prompting module is used to generate and send a target prompting message to the electronic device, if a presence of an abnormal vibration of the vehicle is detected during the process of activating the vehicle vibration monitoring function, so that the electronic device provides a prompting of the presence of the abnormal vibration of the vehicle.

Further, the vibration monitoring apparatus 200 can further include a vibration intensity acquisition unit, a vehicle state acquisition unit, and an abnormal vibration determination unit, wherein:
the vibration intensity acquisition unit is used to acquire a vibration intensity of the vehicle;
the vehicle state acquisition unit is used to, if the vibration intensity exceeds a target intensity threshold, obtain a vehicle state of the vehicle, wherein the vehicle state includes at least one of: an open/closed state of a charging port lid of the vehicle, an open/closed state of a rear door of the vehicle, a remote horn activation state of the vehicle, and a remote lock/unlock state of the vehicle; and
the abnormal vibration determination unit is used to determine whether there is an abnormal vibration in the vehicle based on the vehicle state.

Further, the vehicle is used for connection with an electronic device, and before acquiring the vehicle state of the vehicle if the vibration intensity is greater than the target intensity threshold, the vibration monitoring apparatus 200 can further include an intensity threshold adjustment instruction reception unit and a target intensity threshold determination unit, wherein:
the intensity threshold adjustment instruction reception unit is used to receive an intensity threshold adjustment instruction sent by the electronic device; and
the target intensity threshold determination unit is used to determine the target intensity threshold from multiple intensity thresholds according to the intensity threshold adjustment instruction.

Further, the vehicle state acquisition unit can include a target moment determination unit, a target duration determination unit, and a vehicle state acquisition sub-unit, wherein:
the target moment determination unit is used to determine a moment at which the detected vibration intensity of the vehicle is grater than the target intensity threshold as a target moment;
the target duration determination unit is used to determine a target duration according to the target moment, wherein the target duration includes a first duration prior to the target moment and a second duration subsequent to the target moment; and
the vehicle state acquisition sub-unit is used to obtain the vehicle state of the vehicle within the target duration.

Further, the abnormal vibration determination unit can include an abnormal vibration confirmation unit, wherein:
the abnormal vibration confirmation unit is used to determine that there is an abnormal vibration in the vehicle, if the charging port lid of the vehicle is not in an open situation, the rear door of the vehicle is not in an open situation, the vehicle is not in a remote honking situation, and the vehicle is not in a remote unlock situation.

Those skilled in the art can clearly understand that, for convenience and brevity of description, specific working processes of the above-described apparatus and modules can refer to corresponding processes in the foregoing method embodiments, which are not repeated herein.

In several embodiments provided by the present application, coupling between modules can be electrical, mechanical, or other forms of coupling.

In addition, various functional modules in various embodiments of the present application can be integrated into a single processing module, or can exist as separate physical modules, or two or more modules can be integrated into a single module. The integrated modules can be implemented in hardware form, or in the form of software functional modules.

Referring to FIG. 6, FIG. 6 is a structural block diagram of a vehicle according to an embodiment of the present application. The vehicle 100 can be an electric vehicle, a gasoline vehicle, or other electronic device capable of executing application programs. The vehicle 100 of the present application can include one or more of the components as follows: a processor 110, a memory 120, and one or more application programs, wherein the one or more application programs can be stored in the memory 120 and configured to be executed by the one or more processors 110, and the one or more programs are configured to execute the methods described in the foregoing method embodiments.

The processor 110 can include one or more processing cores. The processor 110 connects various parts within the entire vehicle 100 through various interfaces and lines, and executes various functions and processes data of the vehicle 100 by running or executing instructions, programs, code sets, or instruction sets stored in the memory 120, and by triggering data stored in the memory 120. Optionally, the processor 110 can be implemented in at least one hardware form selected from Digital Signal Processing (DSP), Field-Programmable Gate Array (FPGA), and Programmable Logic Array (PLA). The processor 110 can integrate with one or more combinations of a Central Processing Unit (CPU), a Graphics Processing Unit (GPU), and a modem. Meanwhile, the CPU primarily processes an operating system, user interfaces, and application programs; the GPU is responsible for rendering and drawing content to be displayed; and the modem is used to process wireless communications. It is to be understood that the above-described modem can alternatively not be integrated into the processor 110, but be implemented separately through a communication chip.

The memory 120 can include the Random Access Memory (RAM), and can also include the Read-Only Memory. The memory 120 is used to store instructions, programs, codes, code sets, or instruction sets. The memory 120 can include a program storage area and a data storage area, wherein the program storage area can store instructions for implementing an operating system, instructions for implementing at least one function (such as touch functions, audio playback functions, images playback functions, etc.), and instructions for implementing the various method embodiments described below. The data storage area can further store data created during use of the vehicle 100 (such as phonebooks, audio/video data, chat record data) and so on.

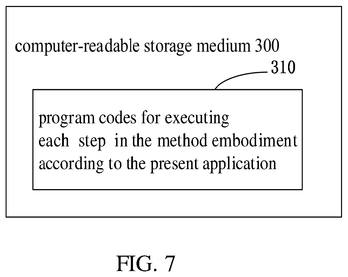

Referring to FIG. 7, FIG. 7 is a structural block diagram of a computer-readable storage medium according to an embodiment of the present application. program codes are stored in the computer-readable medium 300, and the program codes can be triggered by the processor to execute the methods described in the foregoing method embodiments.

The computer-readable storage medium 300 can be an electronic memory such as flash memory, EEPROM (Electrically Erasable Programmable Read-Only Memory), EPROM, hard disk, or ROM. Optionally, the computer-readable storage medium 300 includes a non-transitory computer-readable storage medium. The computer-readable storage medium 300 has a storage space for program codes 310 executing any method steps in the above-described methods. The program codes can be read from or written to one or more computer program products. The program codes 310 can be compressed in an appropriate form for example.

In summary, the vibration monitoring method, apparatus, and vehicle provided in embodiments of the present application acquire a remaining range of the vehicle in case where a vibration monitoring function of the vehicle is activated; activate a vibration shooting function of the vehicle if the remaining range falls within a preset range, wherein a camera of the vehicle is in an activated state in case where the vibration shooting function is activated; and acquire and store images collected by the camera if a presence of an abnormal vibration in the vehicle is detected in case where a vibration shooting function is activated, and furthermore, the vibration monitoring method enhances intelligence, effectiveness, and accuracy of the vibration monitoring of the vehicle, by Incorporating a shooting function into the vibration monitoring function of the vehicle. In addition, during the process of vibration monitoring of the vehicle, by activating the vibration shooting function again for vibration monitoring in case where the remaining range of the vehicle falls within the preset range, effectiveness of on-site shooting of abnormal vibrations of the vehicle is ensured, while substantial power consumption resulting from continuous activation of the vibration shooting function is avoided, and the power consumption of the vibration monitoring of the vehicle is reduced, in case where intelligence of the vibration monitoring of the vehicle is improved..

Finally, it should be noted that: the above embodiments are used merely to illustrate of the technical solutions of the present application, rather than limitations thereof. Although the present application has been described in detail with reference to the foregoing embodiments, those skilled in the art should understand that modifications can still be made to the technical solutions recited in the foregoing embodiments, or equivalent replacements can be made to some technical features thereof. However, such modifications or replacements do not cause the essence of corresponding technical solutions to depart from the spirit and scope of the technical solutions of each embodiment of the present application.

## Claims

1. A vibration monitoring method, wherein the method comprises:
acquiring a remaining range of a vehicle, in case where a vibration monitoring function of the vehicle is activated;
activating a vibration shooting function of the vehicle, if the remaining range is within a preset range, wherein a camera of the vehicle is in an activated state in case where the vibration shooting function is activated; and
acquiring and storing images collected by the camera, if a presence of an abnormal vibration in the vehicle is detected during a process of activating the vibration shooting function.

2. The method according to claim 1, wherein the method further comprises:
deactivating the vibration shooting function, if no abnormal vibration is detected in the vehicle within a preset duration of activating the vibration shooting function.

3. The method according to claim 1, wherein the vehicle is used for connection with an electronic device, and the method further comprises:
generating and sending a target prompting message to the electronic device, if it is detected there is an abnormal vibration in the vehicle during a process of activating the vibration monitoring function, so that the electronic device provides a prompting that there is the abnormal vibration in the vehicle.

4. The method according to any one of claims 1 to 3, wherein the method further comprises:
acquiring a vibration intensity of the vehicle;
acquiring a vehicle state of the vehicle, if the vibration intensity is greater than a target intensity threshold; and
determining whether there is an abnormal vibration in the vehicle according to the vehicle state.

5. The method according to claim 4, wherein the vehicle is used for connection with the electronic device, and before acquiring the vehicle state of the vehicle if the vibration intensity is greater than the target intensity threshold, the method further comprises:
receive an intensity threshold adjustment instruction sent by the electronic device; and
determine the target intensity threshold from a plurality of intensity thresholds according to the intensity threshold adjustment instruction.

6. The method according to claim 4, wherein if the vibration intensity is greater than the target intensity threshold, acquiring the vehicle state of the vehicle comprises:
determining a moment at which the detected vibration intensity of the vehicle is greater than the target intensity threshold as a target moment;
determining a target duration according to the target moment, wherein the target duration comprises a first duration prior to the target moment and a second duration subsequent to the target moment; and
acquiring the vehicle state of the vehicle within the target duration.

7. The method according to claim 4, wherein the vehicle state comprises at least one from a group consisting of an open and/or closed situation of a charging port lid of the vehicle, an open and/or closed situation of a rear door of the vehicle, a remote honking situation of the vehicle, and a remote lock and/or unlock situation of the vehicle.

8. The method according to claim 4, wherein determining whether there is the abnormal vibration in the vehicle according to the vehicle state comprises:
determining that there is an abnormal vibration in the vehicle, if the charging port lid of the vehicle is not in an open situation, the rear door of the vehicle is not in an open situation, the vehicle is not in a remote honking situation, and the vehicle is not in a remote unlock situation.

9. A vibration monitoring apparatus, wherein the apparatus comprises:
a remaining range acquisition module used to acquire a remaining range of a vehicle, in case where a vibration monitoring function of the vehicle is activated;
a vibration shooting function activation module used to activate a vibration shooting function of the vehicle, if the remaining range falls within a preset range, wherein a camera of the vehicle is in an activated state in case where the vibration shooting function is activated; and
an abnormal vibration monitoring module used to acquire and store images collected by the camera, if a presence of an abnormal vibration in the vehicle is detected during a process of activating the vibration shooting function.

10. A vehicle comprising:
one or more processors;
a memory; and
one or more application programs, wherein the one or more application programs are stored in the memory and configured to be executed by the one or more processors, and the one or more programs are configured to execute the method according to any one of claims 1 to 8.

11. A computer-readable storage medium, wherein program codes are stored in the computer-readable storage medium, and the program codes are triggered by a processor to execute the method according to any one of claims 1-8.
